# EUROPÄISCHE PATENTSCHRIFT

(11) **EP 1 124 072 B1**
(45) Veröffentlichungstag und Bekanntmachung des Hinweises auf die Patenterteilung: **09.01.2008**
(21) Anmeldenummer: 01100930.5
(22) Anmeldetag: 17.01.2001
(51) Int. Cl.: F16D 65/12

(54) **Geräuschreduzierte Bremsscheibe**
Brake disc having noise reducing design
Disque de frein avec système de réduction du bruit

(30) Priorität: 12.02.2000 DE 10006394
(43) Veröffentlichungstag der Anmeldung: 16.08.2001
(73) Patentinhaber: Dr.Ing. h.c. F. Porsche Aktiengesellschaft, 70435 Stuttgart (DE)
(72) Erfinder: Meltzer, Gottfried, 01067 Dresden (DE)

(56) Entgegenhaltungen:
- EP-A- 1 205 683
- DE-B- 1 267 473
- DE-C- 3 844 476
- DE-U- 8 815 843
- PATENT ABSTRACTS OF JAPAN vol. 1999, no. 11, 30. September 1999 (1999-09-30) -& JP 11 159550 A (AISIN SEIKI CO LTD;AISIN TAKAOKA LTD), 15. Juni 1999 (1999-06-15)

## Beschreibung

Die Erfindung betrifft eine Bremsscheibe bestehend aus einem Bremsring, der an einem Bremstopf gehalten ist, nach dem Oberbegriff des Patentanspruches 1.

Es ist bereits bekannt, eine Bremsscheibe zweigeteilt auszuführen, wobei zwischen einem Bremsring und einem Bremstopf ein Übergangsbereich, meist in Form einer ebenen, axialen Flanschfläche ausgebildet ist. Es ist es bekannt, im Übergangsbereich Dämpfungsmittel vorzusehen. Durch die Dämpfungsmittel wird eine solche Schwingung bedämpft, indem ihr Energie entzogen wird.

Die JP 11-159550 A zeigt eine einteilige Bremsscheibe, bei der der zylindrische Teil des Bremstopfes mit variabler Wandstärke ausgeführt ist. Auf diese Weise sollen Schwingungen der Bremsscheibe unterdrückt werden.

Aus der DE 88 15 843 U ist eine Reibungsbremse mit Dämpfungselement bekannt. Die zweiteilige Reibungsbremse besteht aus einem Nabenteil und einem hiermit verbundenen Reibbelagträger. Zur Vermeidung von Klappergeräuschen sind im Bereich der Mitnahmeverzahnung drehsymmetrisch zueinander liegende Dämpfungselemente vorgesehen.

Die DE 1267473 B zeigt eine Bremsscheibe nach dem Oberbegriff des Anspruchs 1. Gegenüber diesem Stand der Technik ist es Aufgabe der Erfindung, eine Bremsscheibe so zu gestalten, daß die Geräuschabstrahlung weiter reduziert ist.

Diese Aufgabe wird mit den Merkmalen des Patentanspruches 1 gelöst.

Die Erfindung geht hierbei von der Erkenntnis aus, daß es von Vorteil ist, eine Schwingung bereits in ihrer Entstehung zu verhindern, anstatt eine bereits vorhandene Schwingung zu bedämpfen. Allgemein ist festzuhalten, daß eine besonders störende Geräuschentwicklung von den Schwingungsformen ausgeht, bei denen sich eine räumlich stehende Schwingung ausbildet. Eine solche stehende Schwingung kann sich besonders einfach aufschwingen, d.h. Energie sammeln und weiter aufnehmen, bis das mit dieser Schwingungsform behaftete Bauteil laut vernehmlich schwingt und einem weiteren Aufschaukeln der Schwingung nur durch die innere Dämpfung des Bauteiles eine Grenze gesetzt ist. Die vorgeschlagene Maßnahme bewirkt daher vor allem, daß durch die unsymmetrische Verteilung der Dämpfung die Bildung einer stehenden Schwingung des Bremsringes unterdrückt wird. Hierbei kommt es zu einer umlaufenden Quelle mit Schwingungsbäuchen und Schwingungsknoten, so daß sich eine stehende Schwingungsform nicht mehr ausbilden kann. Darüber hinaus führt die über den Umfang unterschiedliche Dämpfung des Bremsringes zu unterschiedlichen Amplitudenhöhen der Schwingungsbäuche auf dem Umfang. Auch dies führt zu einem unsymmetrischen Schwingungsbild.

Die vorgeschlagene Bauform bietet daher gegenüber dem Stand der Technik den Vorteil, daß eine stehende Schwingung gar nicht erst entstehen kann. Darüber hinaus ist die Konstruktion einer Bremsscheibe nach der Erfindung deutlich vereinfacht, denn es ist nicht mehr, wie nach dem Stand der Technik eine besondere Auslegung von Bremsring und Bremstopf im Sinne einer besonders guten Ankopplung notwendig.

Vorteilhafte Weiterbildungen der Erfindung sind in den Unteransprüchen beschrieben.

Eine mögliche Ausbildung Verteilung des Dämpfungsgrades über den Umfang ist z.B., Dämpfungsmaterial nur in einem Teil des Übergangsbereiches vorzusehen. Im anderen Teil liegt dann im wesentlichen eine Dämpfung mit dem Wert Null vor.

Weiter wird vorgeschlagen, den Bremsring am Bremstopf axial beweglich, d.h. schwimmend zu lagern. Diese Lagerung kann in an sich bekannter Weise erfolgen; wesentlich hierbei ist, daß der Bremsring im Übergangsbereich in axialer Richtung frei schwingen kann. Bei dieser Anordnung kann der Bremsring an seinem den Übergangsbereich bildenden inneren Rand mit großer Amplitude und damit großer Relativbewegung schwingen, so daß das Dämpfungsmaterial optimal wirken kann und die Dämpfungswirkung weiter verbessert ist. Bei dieser Ausführung wird besonders deutlich, daß der Bremstopf nicht mehr an der Schwingung teilnimmt, sondern nur noch als Widerlager für das Dämpfungsmaterial und zur Aufnahme der Bremskräfte (Umfangskräfte) dient. In vorteilhafter Weise kann damit die Form des Bremstopfes weitgehend frei bestimmt werden, was zum einen konstruktiven Aufwand einspart und zum anderen dem Konstrukteur bei der Konstruktion der Bremsscheibe mehr Freiheit läßt.

Schließlich wird vorgeschlagen, das Dämpfungsmaterial über im wesentlichen 1/2, 2/3, 3/4 oder 5/6 des Übergangsbereiches vorzusehen. Diese unterschiedlichen Verteilungen führen zu unterschiedlichen Schwingungsformen und sind daher je nach Material und Form der Bremsscheibe auszuwählen.

Als besonders wirksam hat sich in Versuchen folgende Variante erwiesen: ca. 5/6 des Umfanges des Übergangsbereiches sind mit Dämpfungsmaterial versehen. In dem verbleibenden Sechstel des Übergangsbereiches, welches nicht mit Dämpfung belegt ist, werden mit einem Distanzstück aus Stahl Bremsring und Bremstopf nahezu steif miteinander verbunden. Das Distanzstück dient als Abstandshalter zwischen Bremsring und Bremstopf Topf, damit im verbleibenden Übergangsbereich das ringförmig angeordnete Dämpfungsmaterial nicht zusammengedrückt wird. Durch die hiermit erzeugte lokale Versteifung zwischen Bremsring und Bremstopf lassen sich die doppelten Eigenfrequenzen trennen und man erhält dadurch eine halbierte Schallabstrahlung. Außer der bewegten Schwingform durch die ungleichmäßig verteilte Dämpfung ergeben sich dadurch zusätzlich noch bauteilfeste Schwingformen. Hierbei darf der Bereich der festen Ankopplung durch das Distanzstück nicht beliebig ausgedehnt werden, da sonst die Trennung der Eigenfrequenzen mit einer zu starken Reduktion der Dämpfung einhergeht und insgesamt negativ werden kann. Diese Maßnahme ist dann wirksam, wenn Dämpfungsmaterial über mehr als den halben Umfang, vorzugsweise in einem Bereich von 70% bis 90% des Umfanges, verteilt vorgesehen ist.

Die Erfindung kann selbstverständlich auch für Bremsen ohne Bremstopf, bei denen der Reibring direkt z.B. mit einer Radnabe verbunden ist, verwendet werden.

Die Erfindung ist anhand des in den Figuren dargestellten Ausführungsbeispieles nachstehend näher erläutert. Es zeigen:
- Fig. 1: eine Ansicht einer Bremsscheibe mit einem unterbrochenen Dämpfungsring,
- Fig. 2: einen Schnitt nach der Linie II-II der Fig. 1,
- Fig. 3: eine Schnittdarstellung einer erfindungsgemäßen Bremsscheibe,
- Fig. 4: eine Detailansicht X zu Fig. 3,
- Fig. 5: eine Ansicht einer weiteren alternativen Ausführung zu Fig. 1,
- Fig. 6: einen Schnitt nach der Linie VI-VI der Fig. 5,
- Fig. 7: einen Schnitt nach der Linie VII-VII der Fig. 5,
- Fig. 8: einen Schnitt nach der Linie VIII-VIII der Fig. 5,
- Fig. 9: eine graphische Darstellung einer Schwingungsform einer Bremsscheibe nach der Erfindung,
- Fig. 10: einen Verlauf des Frequenzganges nach Fig. 8,
- Fig. 11: ein Schwingungsbild einer Bremsscheibe nach dem Stand der Technik und
- Fig. 12: einen Verlauf des Frequenzganges zu Fig. 10.

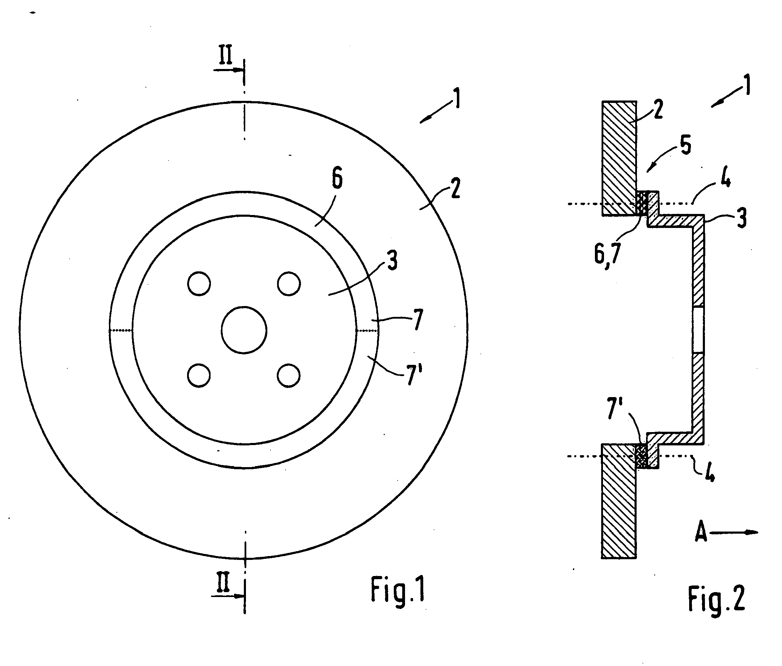

Fig. 1 zeigt eine Bremsscheibe 1, bestehend aus einem Bremsring 2 und einem Bremstopf 3. Der Bremsring 2 und der Bremstopf 3 sind über Schraubverbindungen 4 (vgl. Schnitt nach Fig. 2) miteinander verbunden. In einem Übergangsbereich 5, in dem der Bremsring 2 am Bremstopf 3 in axialer Richtung A anliegt, ist eine Zwischenschicht 6 vorgesehen. Diese Zwischenschicht 6 ist im Ausführungsbeispiel nach Fig. 1 zweigeteilt ausgeführt: eine erste Ringhälfte 7 ist dämpfend ausgeführt, während eine zweite Ringhälfte 7' nicht oder geringer dämpfend ausgeführt ist. So kann beispielsweise die Zwischenschicht 6 als ringförmiger Metallträger ausgeführt sein, der im Bereich der ersten Ringhälfte 7 im Querschnitt vermindert ist und wobei diese Querschnittsverminderung mit dämpfendem Material aufgefüllt ist. Alternativ kann die Zwischenschicht 6 als Ring aus dämpfendem Material hergestellt sein, wobei die erste Ringhälfte 7 höher dämpfend ausgeführt ist als die zweite Ringhälfte 7'. Die Teilung der Zwischenschicht 6 muß nicht hälftig erfolgen, sondern kann auch andere Verhältnisse annehmen.

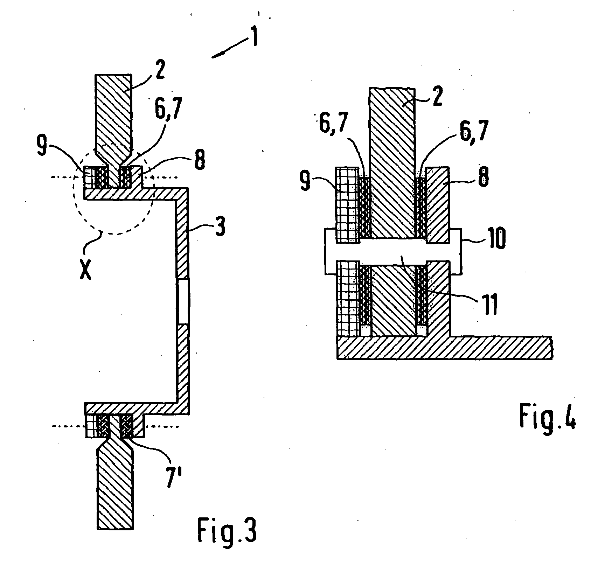

Fig. 3 zeigt im Schnitt eine alternative Bauform der Bremsscheibe 1. Auch hier ist ein Bremsring 2 mit einem Bremstopf 3 verbunden. In diesem Ausführungsbeispiel ist der Bremstopf 3 hülsenförmig vorgezogen und weist einen umlaufenden Steg 8 auf. Gegenüberliegend und parallel zum Steg 8 ist ein Ring 9 vorgesehen, so daß der Bremsring 2 zwischen dem Steg 8 und dem Ring 9 aufgenommen und auf dem Bremstopf 3 längsverschieblich gehalten ist. Beidseits des Bremsringes 2 ist im Anlagebereich des Steges 8 bzw. des Ringes 9 jeweils eine Zwischenschicht 6 vorgesehen, die wie nach Fig. 1 zweigeteilt ausgeführt ist. Der Ring 9, die Zwischenschichten 6, der Reibring 2 sowie der Steg 8 sind von einem Verbindungselement 10, hier einem in der Detailansicht nach Fig. 4 näher dargestellten Niet, durchdrungen, der mit einen verdickten Mittenbereich 11 versehen ist. Der verdickte Mittenbereich 11 bestimmt den Abstand zwischen dem Ring 9 und dem Steg 8 und sorgt dafür, daß die Zwischenschichten 6 unter Vorspannung stehen, ohne jedoch übermäßig komprimiert zu werden.

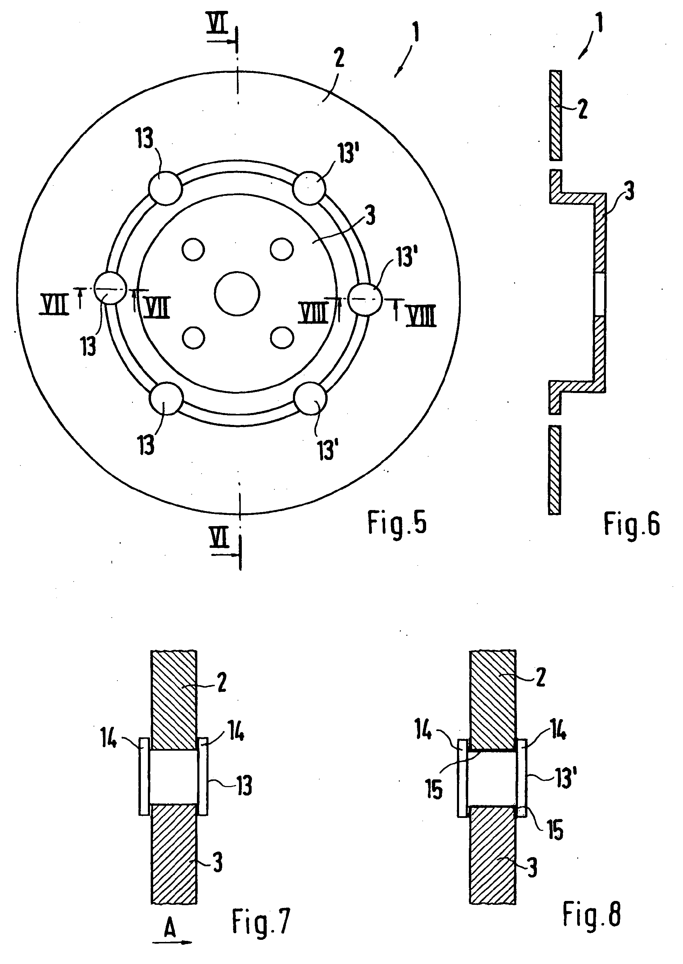

Fig. 5 zeigt eine dritte Variante der Bremsscheibe 1, bei der nunmehr der Bremsring 2 mit dem Bremstopf 3 über Scheibenelemente 13 verbunden ist, die in korrespondierende Ausnehmungen innenseits des Bremsringes 2 und außenseits des Bremstopfes 3 eingreifen.

Ein erstes Scheibenelement 13 ist in Fig. 7 gezeigt. Das Scheibenelement 13 besteht vollständig aus Metall, wobei seitlich vorgesehene Bünde 14 dafür sorgen, daß sich der Bremsring 2 nur im begrenzten Umfange in axialer Richtung A relativ zum Bremstopf 3 bewegen kann (schwimmende Lagerung). Die zweiten Scheibenelemente 13' weisen einen Aufbau gemäß Fig. 8 auf, bei dem der metallische Grundkörper von einer Dämpfungsschicht 15 umgeben ist. Die Verteilung der ersten Scheibenelemente 13 und der zweiten Scheibenelemente 13' muß nicht hälftig erfolgen.

Gegenüber der Bremsscheibe nach Fig. 1 weisen die Bremsscheiben nach den Fig. 3 und 5 den maßgeblichen Unterschied auf, daß diese eine axiale Bewegung des Bremsringes 2 an dessen Innenseite, d.h. in einem Übergangsbereich 5 zum Bremstopf 3, erlauben. Damit kann dort, wo im Übergangsbereich 5 kein Dämpfungsmaterial 7, 15 vorgesehen ist, der Bremsring 2 in axialer Richtung A frei schwingen.

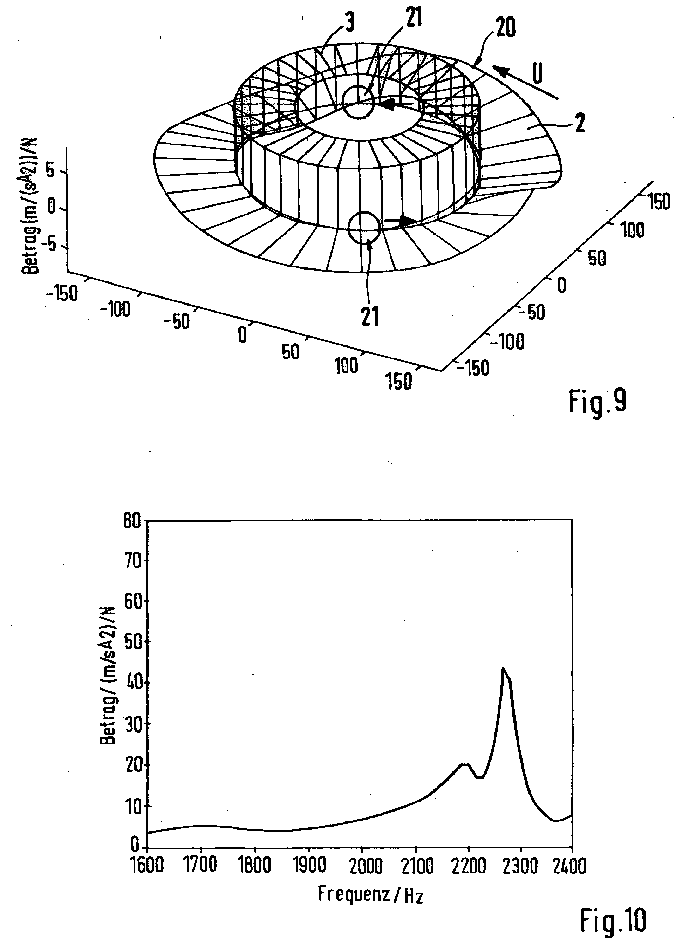

Die Wirkung dieser Anordnung wird im Schwingungsbild nach Fig. 9 deutlich. Fig. 9 zeigt eine Bremsscheibe 1 nach den Fig. 3 oder 5, bei der auf dem halben Umfang Dämpfungsmaterialien 7, 15 vorgesehen sind. Die Bremsscheibe 1 wird durch einen nicht gezeigten Bremssattel eingespannt, der einen ortsfesten Anregungspunkt darstellt. An der Bremsscheibe 1 bildet sich die dargestellte Schwingungsform aus, bei der Bäuche 20 außenseits am Bremsring 2 im Richtung U umlaufen. Knoten 21 lufen in derselben Richtung innenseits am Bremsring 2 um. Je nach Dämpfung im Übergangsbereich 5 ändert sich die Amplitude der Bäuche 20 während ihres Umlaufes am Bremsring 2.

Im Frequenzgangverlauf nach Fig. 10 läßt sich gut erkennen, daß die relevante Eigenfrequenz des Bremsringes 2, die bei ca. 1.720 Hz liegt, fast nicht erkennbar ist. Die Eigenfrequenzen derjenigen Schwingungsformen, bei der der Bremsring 2 und der Bremstopf 3 gemeinsam schwingen, liegen hier bei ca. 2.190 Hz und bei ca. 2.265 Hz und sind stärker ausgeprägt. Am deutlichsten ausgeprägt ist im vorliegenden Beispiel die Eigenfrequenz bei ca. 2.265 Hz.

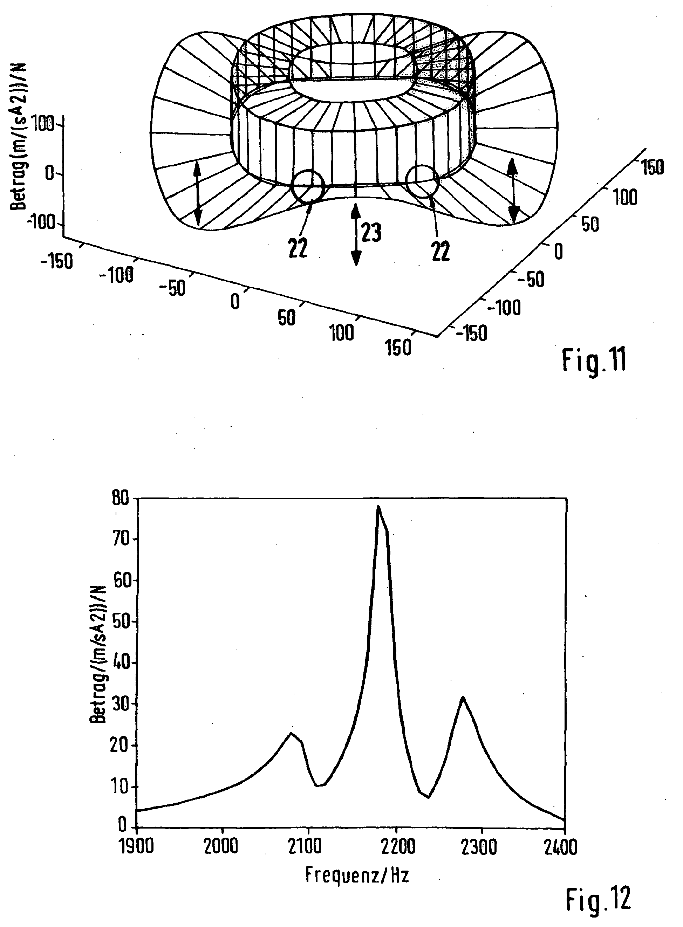

Zum Vergleich ist in Fig. 11 das Schwingungsbild einer Bremsscheibe 1 gezeigt, bei der in konventioneller Weise der Bremsring 2 mit dem Bremstopf 3 fest, d.h. ohne Zwischenschaltung einer Zwischenschicht 6, verbunden ist. Hier bildet sich eine feststehende Schwingung mit sechs Knoten 22 aus; die Schwingungsrichtung ist mit 23 angegeben. Der Frequenzgangverlauf nach Fig. 12 zeigt eine im Vergleich zu Fig. 10 Eigenfrequenzen derjenigen Schwingungsformen, bei der der Bremsring 2 und der Bremstopf 3 gemeinsam schwingen, bei 2.085 Hz und bei 2.275 Hz. Die Lage der ersten Eigenfrequenz (nun bei 2.085 Hz) hat sich verschoben und die Amplitude ist leicht erhöht. Die Amplitude der zweiten Eigenfrequenz der gemeinsamen Schwingungsform bei 2.275 Hz ist gegenüber dem Ausführungsbeispiel in Fig. 10 um rund 1/4 vermindert. Der deutlichste Unterschied aber ergibt sich bei der Eigenfrequenz des Bremsringes 2: diese liegt nun bei 2.180 Hz und die Amplitude hat sich im Vergleich zu der Bremsscheibe 1 nach den Fig. 2 oder 3 mehr als verzehnfacht.

Die Wirkung der in diesen Ausführungsbeispielen über den Umfang variierten Dämpfung im Übergangsbereich 5 zwischen dem Bremsring 2 und dem Bremstopf 3 läßt sich am einfachsten aus dem Vergleich der Schwingungsbilder nach den Fig. 9 und 11 erkennen: während bei der konventionellen, starr verbundenen Bremsscheibe am Bremsring 2 eine stehende Schwingung entstehen kann (vgl. Fig. 11), entsteht durch die variierte Dämpfung ein umlaufendes Schwingungsbild mit variabler Amplitude (vgl. Fig. 9). Dieses Schwingungsbild mit variabler Amplitude mindert die geräuschabstralung im Vergleich zur stehenden Schwingungsform, so daß die Schwingungsenergie des Bremsringes 2 sicher unter dem Maß gehalten werden kann, bei dem die Schwingung des Bremsringes 3 als Bremsenquietschen nach außen hörbar wird.

## Patentansprüche

1. Bremsscheibe (1), bestehend aus einem Bremsring (2), der an einem Bremstopf (3) befestigt ist, wobei in einem Übergangsbereich zwischen Bremsring (2) und Bremstopf (3) Dämpfungsmittel vorgesehen sind, **dadurch gekennzeichnet, dass** zwischen einem Steg (8) und einem Ring (9) des Bremstopfes (3) eine dämpfende Zwischenschicht (6) vorgesehen ist, in welcher ein Reibring (2) gehalten und über Niete (10) mit dem Bremstopf (3) fest verbunden ist.

2. Bremsscheibe nach Anspruch 1, **dadurch gekennzeichnet, daß** das Dämpfungsmittel über den Umfang des Übergangsbereiches verteilt unterschiedliche Dämpfungsgrade aufweist.

3. Bremsscheibe nach Anspruch 1, **dadurch gekennzeichnet, daß** das Dämpfungsmittel nur in einem Teil des Übergangsbereiches vorgesehen ist.

4. Bremsscheibe nach Anspruch 1, 2 oder 3, **dadurch gekennzeichnet, daß** der Bremsring am Bremstopf axial beweglich gelagert ist.

5. Bremsscheibe nach Anspruch 2, **dadurch gekennzeichnet, daß** das Dämpfungsmittel bzw. das stärker dämpfende Mittel über im wesentlichen 1/2, 2/3, 3/4 oder 5/6 des Übergangsbereiches vorgesehen ist.

6. Bremsscheibe nach Anspruch 1, **dadurch gekennzeichnet, dass** das Dämpfungsmittel über mehr als den halben Umfang des Übergangsbereiches verteilt vorgesehen ist.

7. Bremsscheibe nach Anspruch 6, **dadurch gekennzeichnet, daß** das Dämpfungsmittel in einem Bereich von 70 % bis 90 % des Umfanges des Übergangsbereiches vorgesehen ist.

8. Bremsscheibe nach Anspruch 6, **dadurch gekennzeichnet, daß** das Dämpfungsmittel in einem Bereich von im wesentlich 82 % des Umfanges des Übergangsbereiches vorgesehen ist.

## Claims

1. Brake disc (1), composed of a brake ring (2) which is fastened to a brake pot (3), with damping means being provided in a transition region between the brake ring (2) and brake pot (3), **characterized in that** a damping intermediate layer (6) is provided between a web (8) and a ring (9) of the brake pot (3), in which intermediate layer (6) a friction ring (2) is held and fixedly connected by means of rivets (10) to the brake pot (3).

2. Brake disc according to Claim 1, **characterized in that** the damping means has different damping ratios distributed over the periphery of the transition region.

3. Brake disc according to Claim 1, **characterized in that** the damping means is provided only in a part of the transition region.

4. Brake disc according to Claim 1, 2 or 3, **characterized in that** the brake ring is mounted in an axially moveable manner on the brake pot.

5. Brake disc according to Claim 2, **characterized in that** the damping means or the more intensely damping means is provided over substantially 1/2, 2/3, 3/4 or 5/6 of the transition region.

6. Brake disc according to Claim 1, **characterized in that** the damping means is provided so as to be distributed over more than half of the periphery of the transition region.

7. Brake disc according to Claim 6, **characterized in that** the damping means is provided in a region of 70% to 90% of the periphery of the transition region.

8. Brake disc according to Claim 6, **characterized in that** the damping means is provided in a region of substantially 82% of the periphery of the transition region.

## Revendications

1. Disque de frein (1), constitué d'un anneau de frein (2) qui est fixé sur un pot de frein (3), sachant que des moyens d'amortissement sont prévus dans une région de transition entre l'anneau de frein (2) et le pot de frein (3), **caractérisé en ce qu'**une couche intermédiaire amortisseuse (6) est prévue entre une nervure (8) et une bague (9) du pot de frein (3), couche dans laquelle un anneau de friction (2) est maintenu et est fixement assemblé par des rivets (10) au pot de frein (3).

2. Disque de frein selon la revendication 1, **caractérisé en ce que** le moyen d'amortissement présente différents degrés d'amortissement, répartis sur le pourtour de la région de transition.

3. Disque de frein selon la revendication 1, **caractérisé en ce que** le moyen d'amortissement n'est prévu que dans une partie de la région de transition.

4. Disque de frein selon la revendication 1, 2, ou 3, **caractérisé en ce que** l'anneau de frein est monté axialement mobile sur le pot de frein.

5. Disque de frein selon la revendication 2, **caractérisé en ce que** le moyen d'amortissement ou encore le moyen le plus fortement amortisseur est prévu sur environ la moitié, les deux-tiers, les trois-quarts ou les cinq-sixièmes de la région de transition.

6. Disque de frein selon la revendication 1, **caractérisé en ce que** le moyen d'amortissement est prévu en étant réparti sur plus de la moitié du pourtour de la région de transition.

7. Disque de frein selon la revendication 6, **caractérisé en ce que** le moyen d'amortissement est prévu dans une plage de 70% à 90% du pourtour de la région de transition.

8. Disque de frein selon la revendication 6, **caractérisé en ce que** le moyen d'amortissement est prévu dans une plage d'environ 82% du pourtour de la région de transition.
